# EUROPEAN PATENT SPECIFICATION

(11) **EP 1 394 958 B1**
(45) Date of publication and mention of the grant of the patent: **23.11.2005**
(21) Application number: 03255293.7
(22) Date of filing: 26.08.2003
(51) Int. Cl.: H04B 1/40

(54) **Mobile phone**
Mobiltelefon
Téléphone mobile

(30) Priority: 27.08.2002 JP 2002246512
(43) Date of publication of application: 03.03.2004
(73) Proprietor: ALPS ELECTRIC CO., LTD., Ota-ku Tokyo 145 (JP)
(72) Inventor: Kobayashi, Hiroki, Tokyo 145 (JP); Ikarashi, Yasuhiro, Tokyo 145 (JP)
(74) Representative: Kensett, John Hinton

(56) References cited:
- EP-A- 1 207 627
- WO-A-00/31885
- US-A1- 2002 049 075

## Description

### BACKGROUND OF THE INVENTION

### FIELD OF THE INVENTION

The present invention relates to a mobile phone of a dual-mode type sharable between two modes of GSM (Global Systems for Mobile Communications) and WCDMA (Wide Band CDMA) .

### DESCRIPTION OF THE RELATED ART

Described first is a transmission/reception frequency of GSM mode and WCDMA mode. The GSM mode has two mode types: one is a first mode using a frequency of about 900 MHz, and the other is a second mode using a frequency of about 1800 MHz. Specifically , with the first mode, the transmission frequency is in a range of 880 MHz to 915 MHz, and the reception frequency in a range of 935 MHz to 970 MHz. With the second mode, the transmission frequency is in a range of 1710 MHz to 1785 MHz, and the reception frequency in a range of 1805 MHz to 1880 MHz. With the WCDMA mode, the transmission frequency is in a range of 1920 MHz to 1980 MHz, and the reception frequency in a range of 2110 MHz to 2170 MHz.

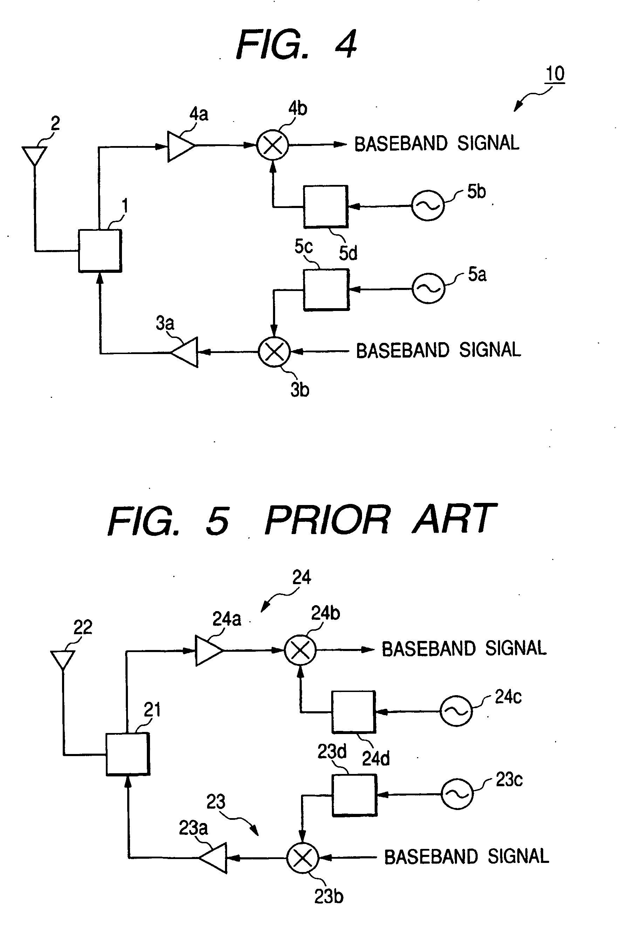

Referring to FIG. 5, described next is the structure of a transmitter/receiver provided to a mobile phone of the conventional type. To an input-output terminal of an isolator 21, an antenna 22 is connected. To an input terminal, connected is an electric amplifier 23a of a transmission circuit 23, and to an output terminal, a low-noise amplifier 24a of a reception circuit 24 is connected. In the transmission circuit 23, a modulator 23b is provided in the previous stage of the electric amplifier 23a. To the modulator 23b, an oscillator signal coming from the first oscillator 23c is provided via a first frequency-divider 23d. In the reception circuit 24, a mixer 24b is provided in the subsequent stage of the low-noise amplifier 24a. To the mixer 24b, an oscillator signal coming from the second oscillator 24c is provided via a second frequency-divider 24d. The first and second frequency-dividers 23d and 24d are switched between a half frequency-division and a quarter frequency-division.

In such a structure, the first oscillator 23c oscillates in a first frequency band of 3420 MHz to 3660 MHz, or in a second frequency band of 3840 MHz to 3960 MHz. As to the second oscillator 24c, oscillation occurs in a third frequency band of 3610 MHz to 3880 MHz, or in a fourth frequency band of 4220 MHz to 4340 MHz.

In a case where the mobile phone is used under the GSM mode, which applies TDMA scheme, the first oscillator 23c and the second oscillator 24c oscillate alternately between a transmission mode and a reception mode. Specifically, when the mobile phone is used under the first mode, the first oscillator 23c oscillates in the first frequency band of 3520 MHz to 3660 MHz, and then an oscillator signal is frequency-divided into four by the first frequency-divider 23d. The result is provided to the modulator 23b as a carrier signal of 880 MHz to 915 MHz . The carrier signal is then modulated by a baseband signal to be input into the modulator 23b, and a transmission signal of 880 MHz to 915 MHz is resultantly output from the modulator 23b. The transmission signal is amplified to be a predetermined level by the electric amplifier 23a, and then output to the antenna 22 via the isolator 21.

The second oscillator 24c oscillates between 3740 MHz to 3880 MHz in the third frequency band, and then an oscillator signal is frequency-divided into four by the second frequency divider 24d. The result is provided to the mixer 24b as a local oscillator signal of 935 MHz to 970 MHz. Then, a reception signal of 935 MHz to 970 MHz reaching the mixer 24b via the antenna 22, the isolator 21, and the low-noise amplifier 24a is mixed with another local oscillator signal of the same frequency. The mixer 24b then outputs a baseband signal through direct conversion.

When the mobile phone is used under the second mode of the GSM mode, both the first oscillator 23c and the second oscillator 24c oscillate. The first oscillator 23c oscillates in a range between 3420 MHz and 3570 MHz in the first frequency band, and then an oscillator signal is frequency-divided into two by the first frequency-divider 23d. Thus, provided to the modulator 23b is a carrier signal of 1710 MHz to 1785 MHz. Thereafter, the modulator 23b outputs a transmission signal of 1710 MHz to 1785 MHz in a similar manner to the above.

The second oscillator 24c oscillates in a range between 3610 MHz and 3760 MHz in the third frequency band, and then an oscillator signal is frequency-divided into two by the second frequency divider 24d. Thus, provided to the mixer 24b is a local oscillator signal of 1805 MHz to 1880 MHz. Thereafter, the mixer 24b outputs a baseband signal in a similar manner to the above.

In a case where the mobile phone is used under the WCDMA mode, the first oscillator 23c oscillates in the second frequency band of 3840 MHz to 3960 MHz, and then an oscillator signal is frequency-divided into two by the first frequency-divider 23d. The result is provided to the modulator 23b as a carrier signal of 1920 MHz to 1980 MHz. Accordingly, output from the modulator 23b is a transmission signal of the same frequency range. The second oscillator 24c oscillates in the fourth frequency band of 4220 MHz to 4340 MHz, and then an oscillator signal is frequency-divided into two by the second frequency divider 24d. The result is provided to the mixer 24b as a local oscillator signal of 2110 MHz to 2170 MHz. The mixer 24b then outputs a baseband signal through direct conversion.

With regard to the relevant prior art, the following documents should be also considered:

WO 0031885 describes a multimode mobile phone; comprising two independent local oscillators for the TX chain and the RX chain.

EP 1207627 describes a multimode mobile phone having single local oscillator for both the TX chain and the RX chain.

US 20020049075 describes Multimode mobile phone having single local oscillators for both the TX chain and the RX chain in WCDMA mode.

### SUMMARY OF THE INVENTION

Here, for transmission and reception under the GSM mode, required is a local oscillator signal and a carrier signal with a high C/N (Signal-to-Noise) ratio from a system viewpoint. Thus, the first and second oscillators are fed with a rather high current. The issue here is that, however, these two oscillators are used under both the GSM and WCDMA modes. Even when a mobile phone is used under the WCDMA mode characterized in a lower C/N ratio than the GSM mode, the current to be consumed by the two oscillators is high. What is worse, with the WCDMA mode, the second oscillator is always operating due to reception standby, resulting in current waste.

Therefore, an obj ect of the present invention is to reduce current consumption of oscillators especially with the WCDMA mode by changing the frequency bands of the oscillators operating depending on which mode.

As means for achieving the above obj ect, in a mobile phone of the present invention, included are: a transmitter/receiver sharable between GSM mode and WCDMA mode; a modulator provided in a transmission circuit in the transmitter/receiver for generating a transmission signal of the GSM mode or the WCDMA mode; a mixer provided in a reception circuit in the transmitter/receiver for receiving a reception signal of the GSM mode or the WCDMA mode; and first and second oscillators. When the transmitter/receiver is used under the GSM mode, an oscillator signal to be output from the first oscillator is provided to both the modulator and the mixer, and when the transmitter/receiver is used under the WCDMA mode, the oscillator signal to be output from the first oscillator is provided only to the modulator but another oscillator signal to be output from the second oscillator is provided to the mixer.

Preferably, the GSM mode includes a first mode using a first transmission signal and a first reception signal of about 900 MHz, and a second mode using a second transmission signal and a second reception signal of about 1800 MHz, the WCDMA mode uses a third transmission signal and a third reception signal of about 2000 MHz, the first oscillator is caused to oscillate in any one of a first, a second, and a third frequency band, the second oscillator is caused to oscillate in a fourth frequency band, a frequency four-times of the first transmission signal and a frequency twice of the second transmission signal are located in the first frequency band, a frequency four-times of the first reception signal and a frequency twice of the second reception signal are located in the second frequency band, a frequency twice of the third transmission signal is located in the third frequency band, and a frequency twice of the third reception signal is located in the fourth frequency band.

Preferably, when the transmitter/receiver is used under the first mode of the GSM mode, the oscillator signal of the first oscillator is provided to both the mixer and the modulator after frequency-divided into four, when used under the second mode of the GSM mode, the oscillator signal of the first oscillator is provided to both the mixer and the modulator after frequency-divided into two, and when used under the WCDMA mode, the oscillator signal of the first oscillator is provided to the modulator after frequency-divided into two and the oscillator signal of the second oscillator is provided to the mixer after frequency-divided into two.

An embodiment of the present invention will now be described, by way of example, with reference to the accompanying diagrammatic drawings, in which:
FIG. 1 is a circuit diagram showing the structure of a mobile phone of the present invention;
FIG. 2 is a circuit diagram showing a case where the mobile phone of the invention is used under GSM mode;
FIG. 3 is a diagram sho wing the relationship, in the mobile phone of the invention, between a transmission/reception frequency in each mode and an oscillation frequency of each oscillator ;
FIG. 4 is a circuit diagram showing a case where the mobile phone of the invention is used under WCDMA mode; and
FIG. 5 is a circuit diagram showing the structure of a conventional mobile phone.

### DETAILED DESCRIPTION OF THE INVENTION

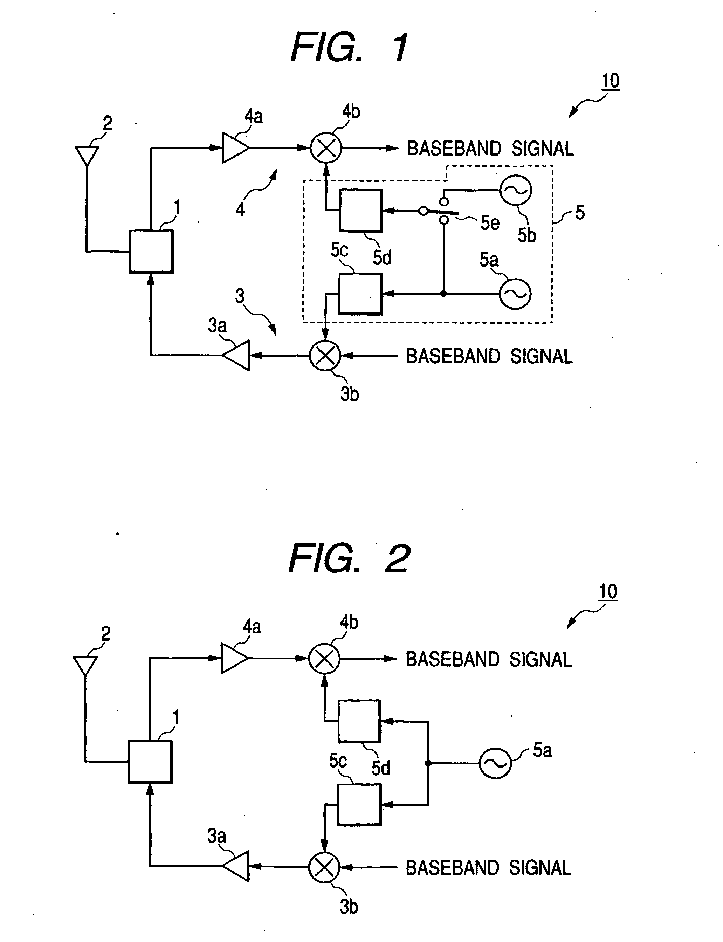

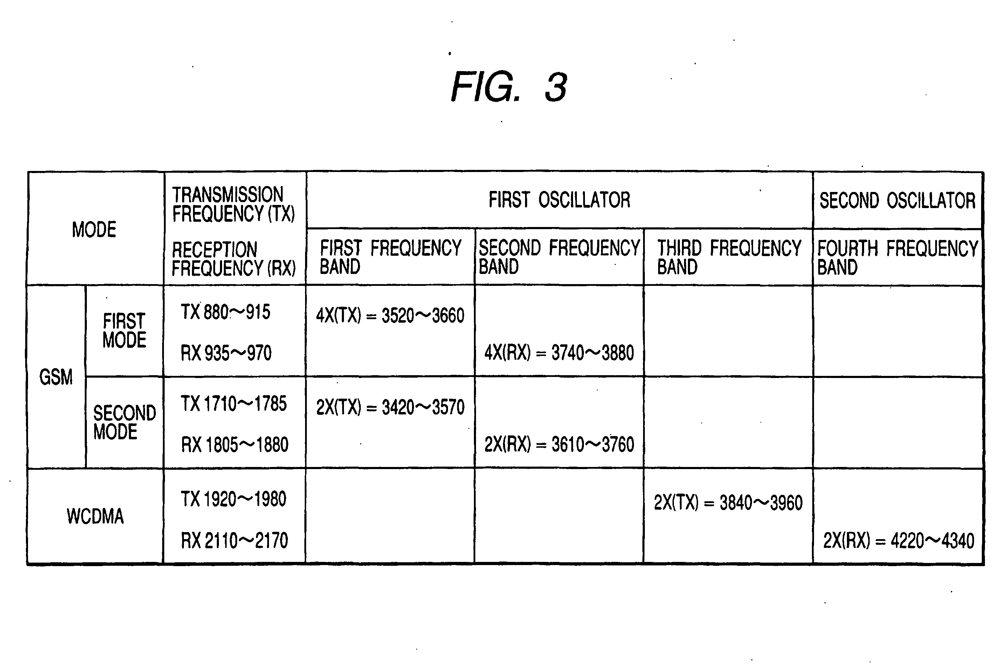

Referring to FIGS. 1 to 4, described now is the structure of a transmitter/receiver 10 provided in a mobile phone of the present invention. FIG. 1 shows the structure of the mobile phone of the invention, FIG. 2 shows the structure thereof when used under GSM mode, FIG. 3 shows the relationship, in the mobile phone of the invention, between a transmission/reception frequency in each mode and an oscillation frequency in each oscillator, and FIG. 4 shows the structure when the mobile phone is used under WCDMA mode.

Referring first to FIG. 1, an input-output terminal of an isolator 1, an antenna 2 is connected. To an input terminal thereof, connected is an electric amplifier 3a of a transmission circuit 3, and in the previous stage thereof, a modulator 3b is provided. To an output terminal of the isolator 1, a low-noise amplifier 4a of a reception circuit 4 is connected, and in the subsequent stage thereof, a mixer 4b is provided.

The modulator 3b receives a carrier signal, and the mixer 4b receives a local oscillator signal, both of those signals are generated by an oscillator section 5. The oscillator section 5 includes a first oscillator 5a, a second oscillator 5b, a first frequency-divider 5c, a second frequency-divider 5d, and switching means 5e. Therein, the first frequency-divider 5c is connected between the first oscillator 5a and the modulator 3b. The switching means 5e connects either the first oscillator 5a or the second oscillator 5b to the second frequency-divider 5d, which is connected between the switching means 5e and the mixer 4b. The frequency-division ratio between the first and second frequency-dividers 5c and 5d is switched into two or four.

The first oscillator 5a is so switched as to oscillate in any one of the first frequency band of 3420 MHz to 3660 MHz, the second frequency band of 3610 MHz to 3880 MHz, and the third frequency band of 3840 MHz to 3960 MHz. The second oscillator 5b oscillates in the fourth frequency band of 4220 MHz to 4340 MHz.

Described next is the transmission/reception frequency for the GSM mode and the WCDMA mode. The GSM mode has two mode types: one is a first mode using a first transmission signal and a first reception signal of about 900 MHz, and the other is a second mode using a second transmission signal and a second reception signal of about 1800 MHz. Specifically, with the first mode, the transmission frequency is in a range of 880 MHz to 915 MHz, and the reception frequency in a range of 935 MHz to 970 MHz. With the second mode, the transmission frequency is in a range of 1710 MHz to 1785 MHz, and the reception frequency in a range of 1805 MHz to 1880 MHz. With the WCDMA mode, used are a third transmission signal and a third reception signal of about 2000 MHs, the transmission frequency is in a range of 1920 MHz to 1980 MHz, and the reception frequency in a range of 2110 MHz to 2170 MHz.

With such a structure, when a mobile phone is used under the GSM mode, the first and second oscillators 5a and 5d are connected to each other by the switching means 5e. The resulting structure is shown in FIG. 2. In a case where the mobile phone is used under the first mode, which applies TDMA scheme, the first oscillator 5a oscillates alternately between the first frequency band ranging from 3520 MHz to 3660 MHz and the second frequency band ranging from 3740 MHz to 3880 MHz, as shown in FIG. 3. Then, an oscillator signal of 3520 MHz to 3660 MHz is frequency-divided into four by the first frequency-divider 5c. The result is provided to the modulator 3b as a carrier signal of 880 MHz to 915 MHz. The carrier signal is then modulated by a baseband signal to be input into the modulator 3b, and a transmission signal of 880 MHz to 915 MHz is resultantly output from the modulator 3b. The transmission signal is amplified to be a predetermined level by the electric amplifier 3a, and then output to the antenna 2 via the isolator 1.

An oscillator signal of 3740 MHz to 3880 MHz is frequency-divided into four by the second frequency divider 5d. The result is provided to the mixer 4b as a local oscillator signal of 935 MHz to 970 MHz. Then, a reception signal of 935 MHz to 970 MHz reaching the mixer 4b via the antenna 2, the isolator 1, and the low-noise amplifier 4a is mixed with a local oscillator signal of the same frequency. The mixer 4b then outputs a baseband signal through direct conversion.

Next, when the mobile phone is used under the second mode of the GSM mode, as shown in FIG. 3, the first oscillator 5a oscillates alternately between the range of 3420 MHz to 3570 MHz in the first frequency band and the range of 3610 MHz to 3760 MHz in the second frequency band. An oscillator signal of 3420 MHz to 3570 MHz is frequency-divided into two by the first frequency-divider 5c. The result is provided to the modulator 3b as a carrier signal of 1710 MHz to 1785 MHz. The carrier signal is then modulated by a baseband signal to be input into the modulator 3b, and a transmission signal of 1710 MHz to 1785 MHz is resultantly output from the modulator 3b. The transmission signal is amplified to be a predetermined level by the electric amplifier 3a, and then output to the antenna 2 via the isolator 1.

An oscillator signal of 3610 MHz to 3760 MHz is frequency-divided into two by the second frequency divider 5d. The result is provided to the mixer 4b as a local oscillator signal of 1805 MHz to 1880 MHz. Then, a reception signal of 1805 MHz to 1880 MHz reaching the mixer 4b via the antenna 2, the isolator 1, and the low-noise amplifier 4a is mixed with a local oscillator signal of the same frequency. The mixer 4b then outputs a baseband signal through direct conversion.

On the other hand, when the mobile phone is used under the WCDMA mode, the second oscillator 5b and the second frequency-divider 5d are connected to each other by the switching means 5e. The resulting structure is shown in FIG. 4. Then, the first oscillator 5a oscillates in the third frequency band ranging from 3840 MHz to 3960 MHz. An oscillator signal is frequency-divided into two by the first frequency-divider 5c. The result is provided to the modulator 3b as a carrier signal of 1920 MHz to 1980 MHz. Accordingly, output from the modulator 3b is a transmission signal of the same frequency. The second oscillator 5b oscillates in the fourth frequency band of 4220 MHz to 4340 MHz, and an oscillator signal is frequency-divided into two by the second frequency-divider 5d. The result is provided to the mixer 4b as a local oscillator signal of 2110 MHz to 2170 MHz. The mixer 4b then outputs a baseband signal through direct conversion.

As is evident from the above, the first oscillator 5a is used for transmission/reception under the GSM mode and transmission under the WCDMA mode, and the second oscillator 5b is used only for reception under the WCDMA mode. Thus, to deal with the GSM mode requiring a high C/N ratio, the first oscillator 5a is fed with a high operation current. The point here is that, compared with the first oscillator 5a, the operation current to be fed to the second oscillator 5b can be less with the WCDMA mode because required for an oscillator signal therefor does not necessarily have such a large C/N ratio as the GSM mode. This successfully leads to the less consumption electricity even with reception standby.

What is better, the second oscillator 5b will be narrower in the oscillation frequency bandwidth, achieving stable oscillation.

According to the present invention, the oscillation frequency bandwidth suffers less change rate by making the oscillation frequency twice or four-times of the transmission frequency or the reception frequency. Thus, the oscillators can stably operate. Further, because the oscillator signal is frequency-divided into two or four, direction conversion can be applied thereto for easy modulation.

As described in the foregoing, according to the present invention, when a transmitter/receiver is used under the GSM mode, an oscillator signal coming from the first oscillator is provided to the modulator and the mixer. When the transmitter/receiver is used under the WCDMA mode, the oscillator signal coming from the first oscillator is provided only to the modulator, and another oscillator signal coming from the second oscillator is provided to the mixer. Compared with the first oscillator, the operation current to be fed to the second oscillator 5b can be less with the WCDMA mode because the C/N ratio required for an oscillator signal therefor is not so large as the GSM mode. This successfully leads to the less consumption electricity even with reception standby.

Further, the first oscillator is caused to oscillate in any one of a first, a second, or a third frequency band, the second oscillator is caused to oscillate in a fourth frequency band, a frequency four-times of the first transmission signal of about 900 MHz and a frequency twice of the second transmission signal of about 1800 MHz are located in the first frequency band, a frequency four-times of the first reception signal of about 900 MHz and a frequency twice of the second reception signal of about 1800 MHz are located in the second frequency band, a frequency twice of the third transmission signal of about 2000 MHz is located in the third frequency band, and a frequency twice of the third reception signal of about 2000 MHz is located in the fourth frequency band. Accordingly, the oscillation frequency bandwidth suffers less change rate, and thus the oscillators can stably operate.

Still further, when the transmitter/receiver is used under the first mode of the GSM mode, the oscillator signal of the first oscillator is provided to both the mixer and the modulator after frequency-divided into four, when used under the second mode of the GSM mode, the oscillator signal of the first oscillator is provided to both the mixer and the modulator after frequency-divided into two, and when used under the WCDMA mode, the oscillator signal of the first oscillator is provided to the modulator after frequency-divided into two and the oscillator signal of the second oscillator is provided to the mixer after frequency-divided into two. In such a manner, a reception signal can be subjected to direct conversion to derive a baseband signal, and the baseband signal can apply direct modulation to derive a transmission signal in an easy manner.

A mobile phone is understood herein to mean any device which has the functionality of a mobile phone.

## Claims

1. A mobile phone, comprising:
a transmitter and receiver sharable between a GSM mode and a WCDMA mode;
a modulator (3b) provided in a transmission circuit in the transmitter and receiver for generating a transmission signal of the GSM mode or the WCDMA mode;
a mixer (4b) provided in a reception circuit in the transmitter and receiver for receiving a reception signal of the GSM mode or the WCDMA mode; and
first (5a) and second (5b) oscillators, wherein
when the transmitter and receiver is used under the GSM mode, an oscillator signal to be output from the first oscillatory (5a) is provided to both the modulator (3b) and the mixer (4b), and when the transmitter and receiver is used under the WCDMA mode, the oscillator signal of the first oscillator (5a) is provided only to the modulator (3b) and another oscillator signal to be output from the second oscillator (5b) is provided to the mixer (4b).

2. The mobile phone according to claim 1, wherein the GSM mode includes a first mode using a first transmission signal and a first reception signal of about 900 MHz, and a second mode using a second transmission signal and a second reception signal of about 1800 MHz, the WCDMA mode uses a third transmission signal and a third reception signal of about 2000 MHz, the first oscillator is caused to oscillate in any one of a first, a second, and a third frequency band, the second oscillator is caused to oscillate in a fourth frequency band, a frequency four-times of the first transmission signal and a frequency twice of the second transmission signal are located in the first frequency band, a frequency four-times of the first reception signal and a frequency twice of the second reception signal are located in the second frequency band, a frequency twice of the third transmission signal is located in the third frequency band, and a frequency twice of the third reception signal is located in the fourth frequency band.

3. The mobile phone according to claim 2, wherein when the transmitter and receiver is used under the first mode of the GSM mode, the oscillator signal of the first oscillator is provided to both the mixer and the modulator after frequency-divided into four, when used under the second mode of the GSM mode, the oscillator signal of the first oscillator is provided to both the mixer and the modulator after frequency-divided into two, and when used under the WCDMA mode, the oscillator signal of the first oscillator is provided only to the modulator after frequency-divided into two but the oscillator signal of the second oscillator is provided to the mixer after frequency-divided into two.

## Patentansprüche

1. Mobiltelefon, aufweisend:
einen Sender und Empfänger, der von einem GSM-Modus und einem WCDMA-Modus gemeinsam nutzbar ist;
einen Modulator (3b), der in einer Übertragungsschaltung in dem Sender und Empfänger zur Erzeugung eines Übertragungssignals des GSM-Modus oder des WCDMA-Modus vorgesehen ist;
einen Mischer (4b), der in einer Empfangsschaltung in dem Sender und Empfänger zum Empfang eines Empfangssignals des GSM-Modus oder des WCDMA-Modus vorgesehen ist; und
einen ersten Oszillator (5a) und einen zweiten Oszillator (5b), wobei
bei der Verwendung des Senders und Empfängers im GSM-Modus ein vom ersten Oszillator (5a) auszugebendes Oszillatorsignal sowohl dem Modulator (3b) als auch dem Mischer (4b) zugeführt wird und bei der Verwendung des Senders und Empfängers im WCDMA-Modus das Oszillatorsignal des ersten Oszillators (5a) nur dem Modulator (3b) zugeführt wird und ein anderes, von dem zweiten Oszillator (5b) auszugebendes Oszillatorsignal dem Mischer (4b) zugeführt wird.

2. Mobiltelefon nach Anspruch 1, wobei der GSM-Modus einen ersten Modus, der ein erstes Übertragungssignal und ein erstes Empfangssignal von etwa 900 MHz verwendet, und einen zweiten Modus, der ein zweites Übertragungssignal und ein zweites Empfangsignal von etwa 1800 MHz verwendet, umfasst, der WCDMA-Modus ein drittes Übertragungssignal und ein drittes Empfangssignal von etwa 2000 MHz verwendet, eine Schwingung des ersten Oszillators in einem von einem ersten, einem zweiten und einem dritten Frequenzband bewirkt wird, eine Schwingung des zweiten Oszillators in einem vierten Frequenzband bewirkt wird, sich eine vierfache Frequenz des ersten Übertragungssignals und eine zweifache Frequenz des zweiten Übertragungssignals im ersten Frequenzband befinden, sich eine vierfache Frequenz des ersten Empfangssignals und eine zweifache Frequenz des zweiten Empfangssignals im zweiten Frequenzband befinden, sich eine zweifache Frequenz des dritten Übertragungssignals im dritten Frequenzband befindet und sich eine zweifache Frequenz des dritten Empfangssignals im vierten Frequenzband befindet.

3. Mobiltelefon nach Anspruch 2, wobei bei der Verwendung des Senders und Empfängers im ersten Modus des GSM-Modus das Oszillatorsignal des ersten Oszillators nach einer Frequenzteilung durch vier sowohl dem Mischer als auch dem Modulator zugeführt wird, bei Verwendung im zweiten Modus des GSM-Modus das Oszillatorsignal des ersten Oszillators nach einer Frequenzteilung durch zwei sowohl dem Mischer als auch dem Modulator zugeführt wird, und bei Verwendung im WCDMA-Modus das Oszillatorsignal des ersten Oszillators nach einer Frequenzteilung durch zwei nur dem Modulator zugeführt wird, aber das Oszillatorsignal des zweiten Oszillators nach Frequenzteilung durch zwei dem Mischer zugeführt wird.

## Revendications

1. Téléphone mobile, comprenant :
un émetteur et récepteur pouvant être partagé entre un mode GSM et un mode AMRC à large bande ;
un modulateur (3b) prévu dans un circuit de transmission dans l'émetteur et récepteur pour générer un signal de transmission du mode GSM ou du mode AMRC à large bande ;
un mélangeur (4b) prévu dans un circuit de réception dans l'émetteur et récepteur pour recevoir un signal de réception du mode GSM ou du mode AMRC à large bande ; et
un premier (5a) et un deuxième (5b) oscillateurs, dans lequel
lorsque l'émetteur et récepteur est utilisé en mode GSM, un signal d'oscillateur devant être émis par le premier oscillateur (5a) est fourni à la fois au modulateur (3b) et au mélangeur (4b), et lorsque l'émetteur et récepteur est utilisé en mode AMRC à large bande, le signal d'oscillateur du premier oscillateur (5a) est fourni uniquement au modulateur (3b) tandis qu'un autre signal d'oscillateur devant être émis par le deuxième oscillateur (5b) est fourni au mélangeur (4b).

2. Téléphone mobile selon la revendication 1, dans lequel le mode GSM inclut un premier mode utilisant un premier signal de transmission et un premier signal de réception d'environ 900 MHz, et un deuxième mode utilisant un deuxième signal de transmission et un deuxième signal de réception d'environ 1 800 MHz, le mode AMRC à large bande utilise un troisième signal de transmission et un troisième signal de réception d'environ 2 000 MHz, le premier oscillateur est amené à osciller dans l'une quelconque d'une première, d'une deuxième et d'une troisième bande de fréquences, le deuxième oscillateur est amené à osciller dans une quatrième bande de fréquences, une fréquence égale à quatre fois celle du premier signal de transmission et une fréquence égale à deux fois celle du deuxième signal de transmission se trouvent dans la première bande de fréquences, une fréquence égale à quatre fois celle du premier signal de réception et une fréquence égale à deux fois celle du deuxième signal de réception se trouvent dans la deuxième bande de fréquences, une fréquence égale à deux fois celle du troisième signal de transmission se trouve dans la troisième bande de fréquences, et une fréquence égale à deux fois celle du troisième signal de réception se trouve dans la quatrième bande de fréquences.

3. Téléphone mobile selon la revendication 2, dans lequel, lorsque l'émetteur et récepteur est utilisé dans le premier mode du mode GSM, le signal d'oscillateur du premier oscillateur est fourni à la fois au mélangeur et au modulateur une fois la fréquence divisée en quatre ; en cas d'utilisation dans le deuxième mode du mode GSM, le signal d'oscillateur du premier oscillateur est fourni à la fois au mélangeur et au modulateur une fois la fréquence divisée en deux ; et en cas d'utilisation en mode AMRC à large bande, le signal d'oscillateur du premier oscillateur est fourni uniquement au modulateur une fois la fréquence divisée en deux, tandis que le signal d'oscillateur du deuxième oscillateur est fourni au mélangeur une fois la fréquence divisée en deux.
